(19) Europäisches Patentamt European Patent Office Office européen des brevets

(11) **EP 1 910 005 B1**

(12) **EUROPÄISCHE PATENTSCHRIFT**

(45) Veröffentlichungstag und Bekanntmachung des Hinweises auf die Patenterteilung:
**15.02.2012 Patentblatt 2012/07**

(21) Anmeldenummer: **06762769.5**

(22) Anmeldetag: **22.07.2006**

(51) Int Cl.:
**B23G 1/34** (2006.01)

(86) Internationale Anmeldenummer:
**PCT/EP2006/007228**

(87) Internationale Veröffentlichungsnummer:
**WO 2007/014659 (08.02.2007 Gazette 2007/06)**

(54) **VERFAHREN UND VORRICHTUNG ZUM HERSTELLEN VON GEWINDEN, INSBESONDERE FÜR BOHRGESTÄNGE ODER DERGLEICHEN**

METHOD AND APPARATUS FOR PRODUCING THREADS, IN PARTICULAR FOR DRILL STRINGS OR THE LIKE

PROCEDE ET DISPOSITIF DE FABRICATION DE FILETAGES NOTAMMENT DESTINES A DES TRAINS DE TIGES OU SIMILAIRES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.07.2005 DE 102005035576**

(43) Veröffentlichungstag der Anmeldung:
**16.04.2008 Patentblatt 2008/16**

(73) Patentinhaber: **MAG IAS GmbH**
**73033 Göppingen (DE)**

(72) Erfinder: **SCHIEMANN, Harry**
**CH-8200 Schaffhausen (CH)**

(74) Vertreter: **Lempert, Jost et al**
**LICHTI Patentanwälte**
**Postfach 41 07 60**
**76207 Karlsruhe (DE)**

(56) Entgegenhaltungen:
**EP-A1- 1 125 666      EP-A1- 1 522 281**
**EP-A1- 1 522 281      DE-A1- 3 638 698**
**DE-A1- 3 638 698      US-A- 5 076 744**
**US-A- 5 396 821        US-A- 5 396 821**

• **HOFEN J-D ET AL: "GENAU GEWINDE WIRBELN AUF DREHAUTOMATEN" WERKSTATT UND BETRIEB, CARL HANSER VERLAG, MUNCHEN, DE, Bd. 134, Nr. 7/8, August 2001 (2001-08), Seiten 24-26, XP001101270 ISSN: 0043-2792**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zum Herstellen von Gewinden mittels Drehen, insbesondere für Bohrgestänge oder dergleichen, wobei Werkstück und Drehwerkzeug eine Relativdrehbewegung mit hoher Geschwindigkeit um eine Achse des Werkstücks und eine Relativlängsbewegung mit dem gegenüber geringer Geschwindigkeit aufweisen und wobei weiterhin zwischen Drehwerkzeug und Werkstück eine relative radiale Oszillations-Bewegung bewirkt wird.

Gewinde werden üblicherweise durch Gewindeschneiden hergestellt, wobei dies mittels einer Drehmaschine geschehen kann. Hierbei sind Relativbewegung und Relativlängsbewegung von Werkstück und Werkzeug genau aufeinander abgestimmt, und es muss ggf. mit mehreren Durchgängen zur Erzeilung der gewünschten Gewindetiefe gearbeitet werden, wobei dies bis zu 40 Durchgänge pro Gewinde sein können. Nachteilig ist beim Gewindeschneiden weiterhin, dass hier lange Metallspäne entstehen, die nur schwer beherrschbar sind.

Beim Gewindefräsen gemäß der US 5 076 744 führt ein rotierendes Werkzeug (als Einschneider oder Mehrschneider) lediglich gegenüber dem Werkstück eine kreisförmige Arbeitsbewegung und zur Erzeugung der Gewindesteigung einen gleichzeitigen Axialvorschub aus. Dieses Verfahren des Gewindefräsens wird bei großen Gewinden eingesetzt. Eine oszillierende Radialbewegung ist nicht vorgesehen. Die dortigen Antriebe dienen nicht zur Ausführung von permanenten Schwingungsbewegungen während des Bearbeitens, sondern lediglich zur Ausführung von Zustellbewegungen in X- und Y-Richtung.

Die EP 1 125 666 betrifft ein Bearbeitungsgerät zum Bearbeiten eines an der Stirnseite eines sich drehenden Werkstücks mittels Gewindewirbeln. Ein sich um parallele Achsen drehendes und umlaufendes Werkzeug greift an der Stirnseite des Werkstücks an, wobei eine Arbeits-Drehbewegung durch einen ersten Motor erzeugt wird, während exzentrische Bewegungen durch einen (zweiten) Radius-Änderungsmotor bewirkt werden, der auf einen Wellenerzeuger wirkt. Diesem ist ein Differenzialgetriebe nachgeordnet. Mit der Arbeits-Drehbewegung hat dies nichts zu tun. Eine Synchronisation zwischen der durch den zweiten Motor bewirkten Radiusänderung und der durch den ersten Motor bewirkten Arbeits-Drehbewegung ist nicht vorgesehen.

Bei der Druckschrift Hofer et al. "Genau Gewinde Wirbeln auf Drehautomaten" werden mit sich jeweils um ihre Achsen mit hoher Geschwindigkeit drehendes Werkzeug und in niedriger Geschwindigkeit drehendes Werkstück zur axialen Überlappung verfahren, dann das Werkzeug radial zugestellt, bis es am Werkstück greift und anschließend werden die Teile unter Beibehaltung der Drehbewegungen axial zueinander bewegt. Eine mechanische radiale Oszillationsbewegung mit Synchronisation einer mit einer Arbeits-Drehbewegung ist nicht vorgesehen, sondern lediglich eine radiale Zustellbewegung des Werkzeugs. Die Erzeugung der Kinematik ist nicht beschrieben. Es ist lediglich ausgesagt, dass das Werkzeug durch seine radiale Bewegung in das sich drehende Werkstück eindringt und die Tiefe der radialen Werkzeugbewegung der Gewindetiefe entspricht.

Die DE 36 38 698 A1 beschreibt einen Aufbau zur Erzeugung einer Oszillations-Bewegung des Werkzeuges durch Überlagerung in Verdrehungen einer Kugelspindel und einer Spindelmutter als Antrieb eines Werkzeugträgers auf einem Planschlitten einer CNC-Drehmaschine. Derartige Drehmaschinen weisen demgemäß einen einfacheren Oszillationsantrieb mit nur einem Stellmotor mit Kugelspindel und fester Spindelmutter auf. Die Schwachstelle dieser Systeme liegt im hohen Verschleiß der Kugelspindeln und der vergleichsweise niedrigen Werkstückdrehzahl wegen der begrenzten Regelgeschwindigkeit der Stellmotoren.

Der Erfindung liegt die Aufgabe zugrunde, ein Verfahren und eine Vorrichtung zur Herstellung von Gewinden mittels Drehbearbeitung zu schaffen, bei denen mit hohen Drehgeschwindigkeiten die Gewinde in einem Durchgang hergestellt werden können und damit hohe Produktivitätssteigerung erreichbar sind.

Erfindungsgemäß wird die genannte Aufgabe durch ein gattungsgemäßes Verfahren mit den Merkmalen des Anspruchs 1 und durch eine gattungsgemäße Vorrichtung mit den Merkmalen des Anspruchs 6 gelöst.

Das erfindungsgemäße Verfahren beruht auf einem Drehprozess mit steigerungsunabhängigem Vorschub und der Erzeugung des Gewindeprofils unter Verwendung einer rotierenden Kurvenscheibe, die auf die radiale Zustellung des Werkzeuges wirkt. Die Drehbewegungen des Werkstücks und der Kurvenscheibe werden dabei derart synchronisiert, dass sich aus den Relativbewegungen des drehenden Werkstückes und des oszillierenden Werkzeuges ein Gewinde mit der gewünschten Steigung und Richtung ergibt. Das Gewindeprofil wird durch die Formgebung der kurvenscheibe bestimmt. Je nach Stabilität des Werkzeuges werden die Gewinde in einem bis maximal zwei Durchgängen bis zu einer Gewindetiefe von mehreren Millimetern, wie insbesondere 3 mm fertig gedreht, was einen Produktivitätsvorteil des Verfahrens ausmacht, im Gegensatz zu herkömmlichen nicht gattungsgemäßen Gewindeschneiden mit Erzeugen des Gewindes durch Längsbewegung des Werkzeuges synchron zur Gewindesteigung mit schrittweiser Zustellung des Werkzeuges in der Gewindetiefe, wobei je nach Profilgröße dafür eine größere Anzahl von Durchgängen erforderlich ist, die auch durch die Werkstück-Beschaffenheit und die Werkzeug-Qualität bestimmt wird.

Mittels der Erfindung können unterschiedliche Gewindeformen bei zylindrischer und konischer Grundform des Werkstücks hergestellt werden, wobei die Zahnformen R-Gewinde (Rope- oder Seilgewinde) oder aber auch Trapezgewinde, insbesondere in Form flacher Trapeze, sein können. Die Erfindung eignet sich insbesondere zur Herstellung der Verbindungsgewinde von Rohrgestängen.

Bevorzugten Ausgestaltung en der Erfindung sind in den Unteransprüche beschrieben

Durch die Erfindung erfolgt eine Aufteilung des Bearbeitungsvorgangs auf eine einfache und bewährte mechanische Erzeugung des Gewindeprofils und eine lineare, elektronische Synchronisation zur Erzeugung der Gewindesteigung, sowie die Verwendung des X-Schlittens einer Drehmaschine zur Erzeugung des Gewindekonus. Die Herstellung einer Nockenform für die Erzeugung des Gewindeprofils kann auf herkömmlichen Koordinaten-Schleifmaschinnen oder auf Fräsmaschinen erfolgen. Ein Umrichten auf unterschiedliche Gewindeformen ist durch Austausch der Nocken und des Teileprogramms in einfacher Weise möglich. Wegen der sanften Profilveränderung der Nocken (Gewindeübergänge mit Radien) kann mit einer Spindeldrehzahl von bis zu ca. 1000 U/min. gearbeitet werden.

Durch die Erfindung ist es möglich, mit einer Relativumdrehungszahl zwischen 800 und 1000 Umdrehungen pro Minute zu arbeiten, wobei in der Regel in üblicher Weise die Drehung des Werkstücks vorgenommen wird. Der axiale Längsvorschub des Werkzeuges relativ zum Werkstück liegt in der Größenordnung von 0,15 bis 0,25 mm/Umdrehung, vorzugsweise bei 0,2 mm/Umdrehung. Das Gewinde wird in einem Durchgang hergestellt, wobei seine Genauigkeit gut kontrollierbar ist. Durch die Erfindung kann das Gewindeprofil jeweils in einem Durchgang erzeugt werden, so dass auf getrenntes Schruppen und Schlichten verzichtet werden kann. Es ergibt sich eine perfekte Spanbildung. Durch die Oszillation des Werkzeugs entsteht bei jeder Umdrehung ein Span mit zunehmender und abnehmender Dicke, der zuverlässig an der dünnsten Stelle bricht und vor allem bei Innengewinden die Entfernung aus der Bohrung durch Herausblasen oder Ausschwemmen erleichtert.

Bei derartigen Bohrgestängegewinden befinden sich auf 10 cm Länge je nach Gewindedurchmesser ca. 5 bis 8 Windungen.

Die erfindungsgemäße Vorrichtung zum Herstellen von Gewinden, die eine an sich übliche Drehmaschine allerdings mit oder erfindungsgemäßen Einrichtung zur Erzeugung der oszillierenden Bewegung ist, kann eine Gegenspindel-Drehmaschine sein, so dass zwei Werkstücke gleichzeitig bearbeitet werden können, insbesondere, wenn gegenläufige Gewinde hergestellt werden sollen, gegenläufig in dem Sinne, dass beispielsweise bei Innengewinden an einer Muffe beide Gewinde von ihrer jeweiligen Eingangsseite her gedreht werden.

Die für die Gewinde-Erzeugung notwendige Form der Kurvenscheibe kann aus dem Profil des jeweiligen Gewindes abgeleitet werden, indem dieses aufgezeichnet und in Längsrichtung in Schnitte unterteilt wird. Es kann eine Auflösung besser als 5° erreicht werden. Dabei werden die Schnitte unter Berücksichtigung der Werkzeug-Kontur in radiale Verschiebungen umgesetzt, als Basis für die Form der Kurvenscheibe.

Bei der Herstellung der Kurvenscheibe aus dem Rohling kann das Scheibenprofil auf einer numerisch gesteuerten Fräsmaschine erzeugt werden, wobei die im CAD ermittelten Kurvenradien direkt für die Programmierung verwendet werden. Wegen der relativ groben Auflösung erfolgt eine Interpolation der Zwischenwerte über Spline-Funktionen, die bereits Bestandteil moderner CNC-Steuerungen sind.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im Einzelnen erläutert sind. Dabei zeigt:

Fig. 1     in schematischer Darstellung eine Gegenspindel-Drehmaschine mit zwei Gewinde-Dreheinrichtungen;

Fig. 2     eine schematische Perspektivdarstellung einer erfindungsgemäßen Gewinde-Dreheinrichtung;

Fig. 3     einen Längsschnitt durch die Gewinde-Dreheinrichtung der Fig. 2;

Fig. 4     eine Seitenansicht der wesentlichen Teile einer Gewinde-Dreheinrichtung mit einem Werkzeug zur Außenbearbeitung eines Hohlrohres;

Fig. 4a    eine Sicht entsprechend der der Fig. 4, mit einem Werkzeug zur Innenbearbeitung (allerdings in Sicht entgegen der der Fig. 3);

Fig. 5     einen Schnitt entsprechend V-V durch die Nockeneinheit der Gewinde-Dreheinrichtung;

Fig. 5a    einen Schnitt entsprechend A-A der Fig. 5 durch die Nockeneinheit;

Fig. 6.    einen Schnitt entsprechend VI-VI der Fig. 5a durch die Nockeneinheit;

Fig. 7     eine Nockenscheibe zur Erzeugung eines sogenannten R-Gewindes (Rope- oder-Seil-Gewinde mit im Längsschnitt sinusförmiger Gewindekontur);

Fig. 7a    eine Veranschaulichung der Erzeugung eines R-Gewindes mittels der Nockenscheibe der Fig. 7;

Fig. 8     eine Darstellung einer Nockenscheibe zur Erzeugung eines T-Gewindes (Trapezgewindes);

Fig. 8a    eine Darstellung zur Veranschaulichung eines T-Gewindes mittels der Nockenscheibe der Fig. 8;

Fig. 9a,b  Trapezgewinde von Schrauben-Teil (Fig. 9a) und Mutterteil (Fig. 9b) eines Gestängegewindes.

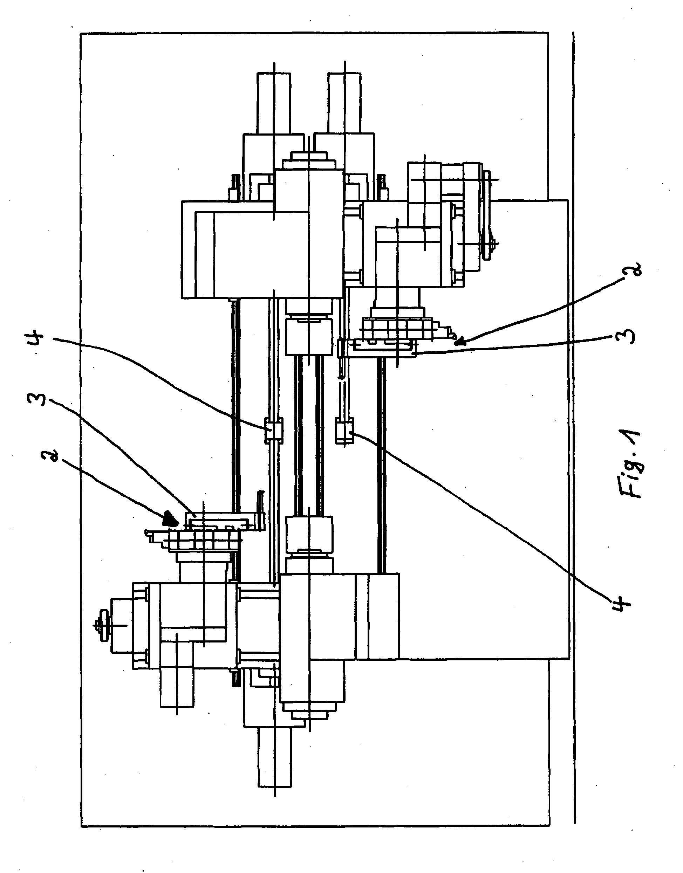

Die Fig. 1 zeigt in schematischer Darstellung eine Drehmaschine 1 mit zwei Gewinde-Dreheinrichtungen 2, so dass an dieser Maschine gleichzeitig zwei Gewinde gedreht werden können. An den Gewindedreheinrichtungen 2 am Nockenteil 3 sind Drehwerkzeuge 4 angeordnet.

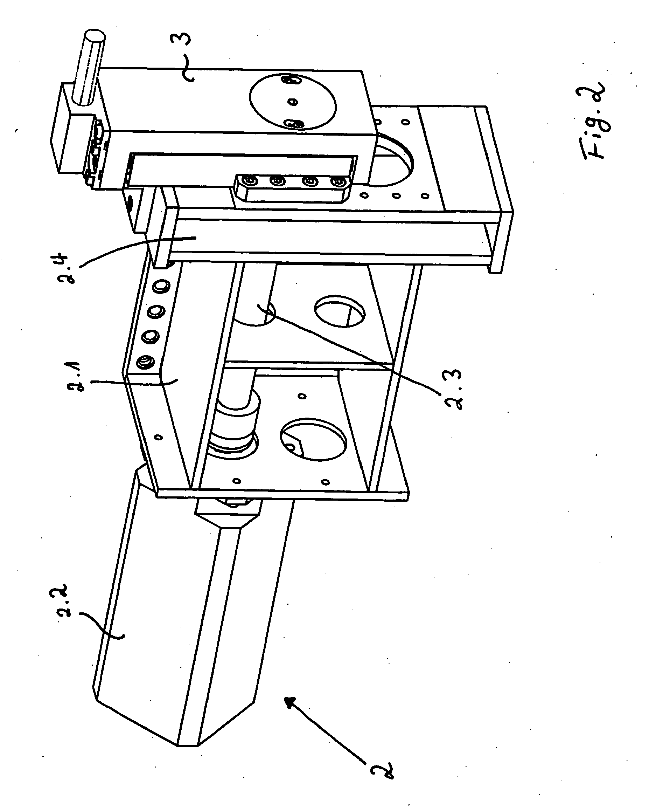

Die Fig. 2 zeigt eine Gewinde-Dreheinrichtung 2 in perspektivischer Darstellung mit einem Halteteil 2.1, einem Servomotor als Antriebsmotor 2.2, eine Antriebswelle 2.3, einer Kupplungseinheit 2.4 und eben der Nokkeneinheit 3.

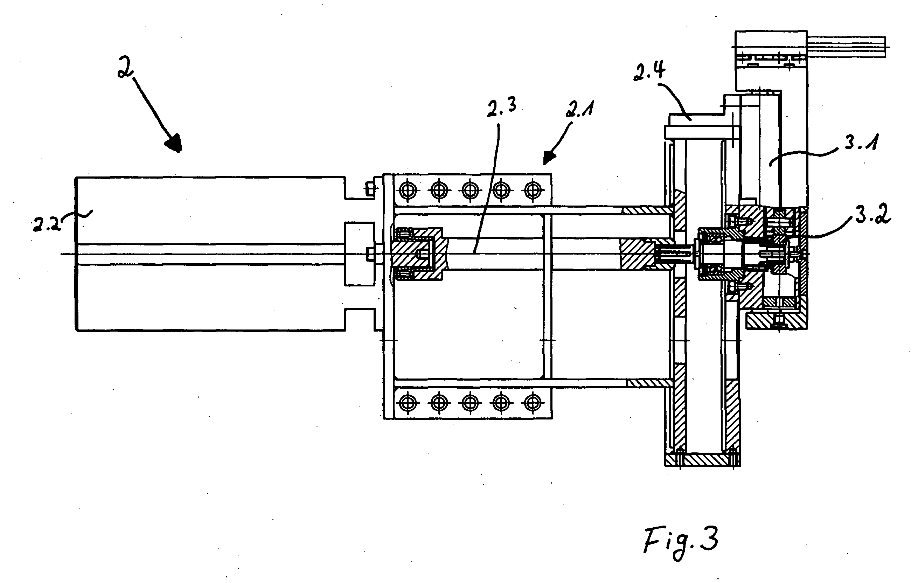

Die Fig. 3 zeigt einen Längsschnitt durch die Gewinde-Dreheinrichtung 2 der Fig. 2, wobei die schon benannten Teile in gleicher Weise benannt sind.

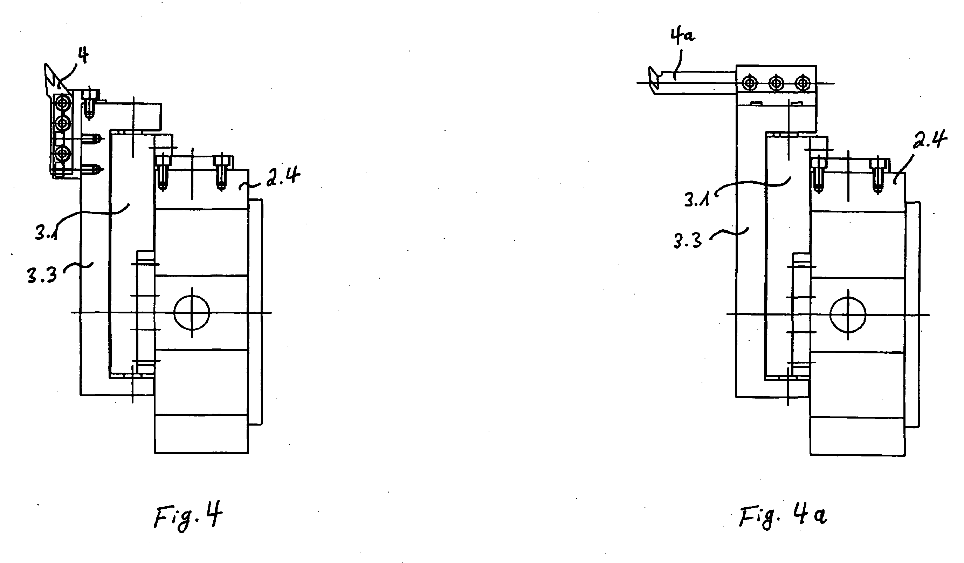

Die Nockeneinheit weist ein Halteteil 3.1 auf, welches mit der Kupplungseinheit 2.4 fest verbunden ist und in dem eine mit der Welle 2.3 verbundene Kurven- oder Nockenscheibe 3.2 drehbar ist. Das Halteteil 3.1 trägt in noch genauer zu beschreibender Weise einen senkrecht zur Achse der Nockenscheibe 3.2 und in Längsrichtung des Halteteils 3.1 verschiebbaren Schlitten 3.3, der ein Drehwerkzeug 4 trägt (in Fig. 3 nicht dargestellt; s. Fig. 1, 4, 5) und zwar in der Ausgestaltung der Fig. 4 das dargestellte Werkzeug 4 zur Außenbearbeitung und in der Ausgestaltung der Fig. 4a ein Werkzeug 4a zur Innenbearbeitung.

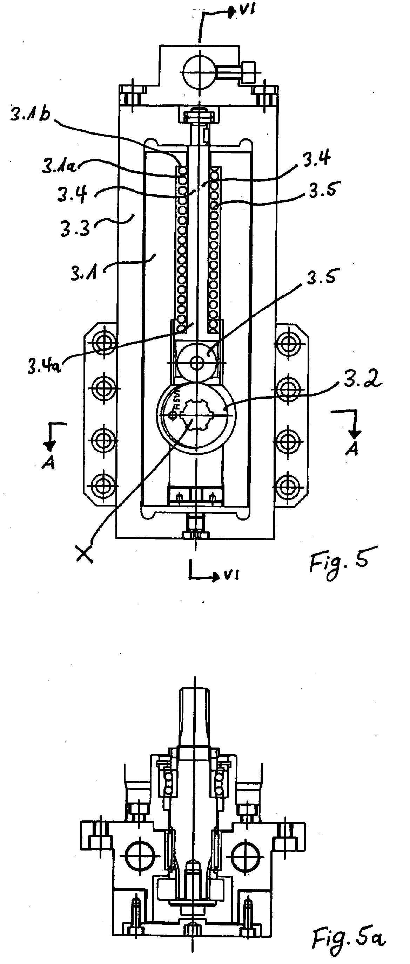

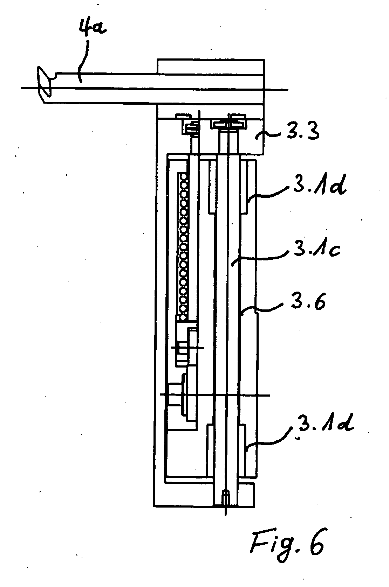

Wie der Fig. 5 zu entnehmen ist, befindet sich innerhalb des Halteteils 3.1 in einer Längsausnehmung 3.1a desselben ein in Längsrichtung des Halteteils 3.1 bzw. der Längsausnehmung 3.1a und damit senkrecht zur Achse X der Nockenscheibe 3.2 beweglicher Stößel, an dem an seinem unteren Ende eine Rolle 3.5 gelagert ist, die in Rollkontakt mit der Nockenscheibe 3.2 steht. Zwischen einer oberen Schulter 3.1b des Halteteils 3.1 und einem Widerlager 3.4 in Form eines Radialflansches ist eine als Schraubenfeder ausgebildete Rückholfeder 3.5 angeordnet, die demgemäß den Stößel 3.4 gegen die Nokkenscheibe 3.2 drückt. Der Stößel 3.4 ist formschlüssig mit dem schon erwähnten verschiebbaren Schlitten 3.3 verbunden, der an seiner Oberseite ein Drehwerkzeug 4 oder 4a (Fig. 4, 4a) trägt. Weiter ist der Schlitten mit zwei Führungsstangen 3.6 verbunden, die jeweils unter engen Toleranzen in weiteren Ausnehmungen 3.1c des Halteteils 3.1 gleitbar ist und durch am oberen und unteren Ende des Halteteils 3.1 befindlichen Kugelbüchsen 3.1d geführt ist. Die beiden Führungsstangen 3.1c und der Stößel 3.4 bilden den Querschnitt (Fig. 6).

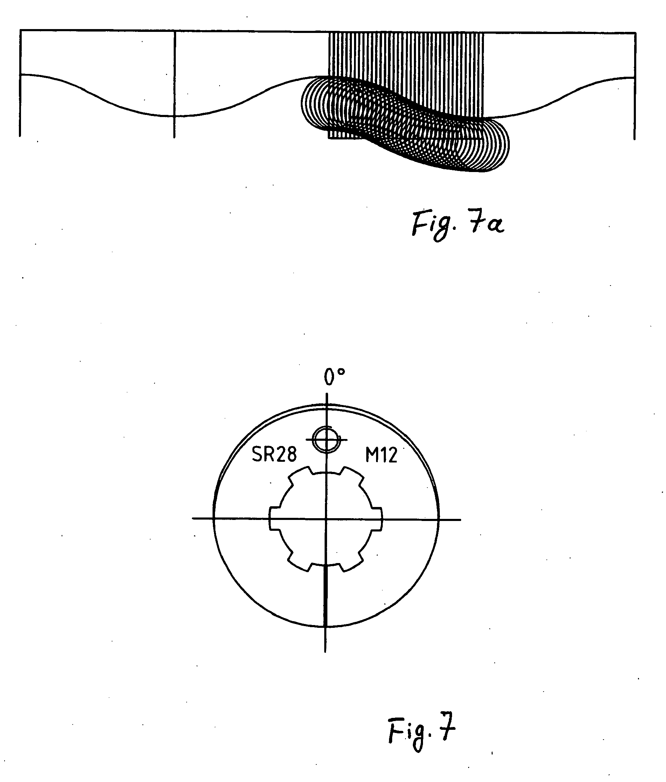

Die Fig. 7 zeigt eine Nockenscheibe etwa im Verhältnis 1:1, während die Fig. 7a veranschaulicht, wie entlang eines Werkstücks durch Auf- und Abbewegung des Drehwerkzeugs 4, 4a aufgrund der Bewegung des Stößels 3.4 und des Schlittens 3.3 ein Schraubgewinde durch den mechanischen Arbeitsvorgang des Drehens erzeugt wird. Die dargestellten Kreise entsprechen dabei dem Radius des Drehwerkzeuges.

Betrachtet man Querschnitte eines Gewindes an beliebiger Stelle desselben, so entsteht je nach Gewindeart eine Schnittfläche, die sich bei Verschiebung in Axialrichtung des Gewindes wiederholt, allerdings verdreht um einen Winkel, der sich aus dem Verhältnis des Z-Vorschubs zur Gewindesteigung ergibt. Bei einer Steigung S von 12.7 mm und einem Vorschub von 0.25 mm/ Umdrehung bedeutet dies eine Verdrehung von $(0.25/12.7) \times 360 = 7.087°$ zwischen zwei nebeneinander liegenden Schnitten, und zwar positiv oder negativ je nach Steigungsrichtung (rechts- oder linksgängig) des Gewindes.

Das Profil der Schnittfläche wird erfindungsgemäß durch das oszillierende Werkzeug 4, 4a hergestellt, dessen radiale Bewegung durch den umlaufenden Nokken erzeugt wird. Die Drehzahl des Nockens ist mit der Drehzahl des Werkstücks derart synchronisiert, dass eine kontinuierliche Verdrehung der Schnittflächen stattfindet. Auf das obige Beispiel bezogen, ergibt sich ein Faktor von 1.02008 resp. 0.98069 je nach Steigungsrichtung. Grundsätzlich gilt

$$F = \frac{S/V}{S/V \pm 1},$$

wobei S die Steigung des Gewindes in mm und V den Vorschub der Relativlängsbewegung in mm/Umdrehung angibt.

Die Zustellbewegung auf Gewindetiefe sowie die Erzeugung eines konischen Gewindes erfolgt durch den vorhandenen X-Schlitten der Drehmaschine als Träger eines Zusatzschlittens. Dieser ist auf der Stirnseite der Revolverscheibe der Drehmaschine angebracht und durch die Revolver-Schwenkachse hindurch mit einem Servomotor angetrieben, der mit der Hauptspindel in der beschriebenen Form synchronisiert wird.

Obwohl die Herstellung des Gewindes grundsätzlich in einem Arbeitsvorgang erfolgen kann, können, soweit notwendig, die Gewinde auch in zwei Durchgängen (Schruppen und Schlichten) hergestellt werden. Dies bedingt die Verwendung unterschiedlicher Vorschübe und eine entsprechende Anpassung des programmierbaren Synchronfaktors.

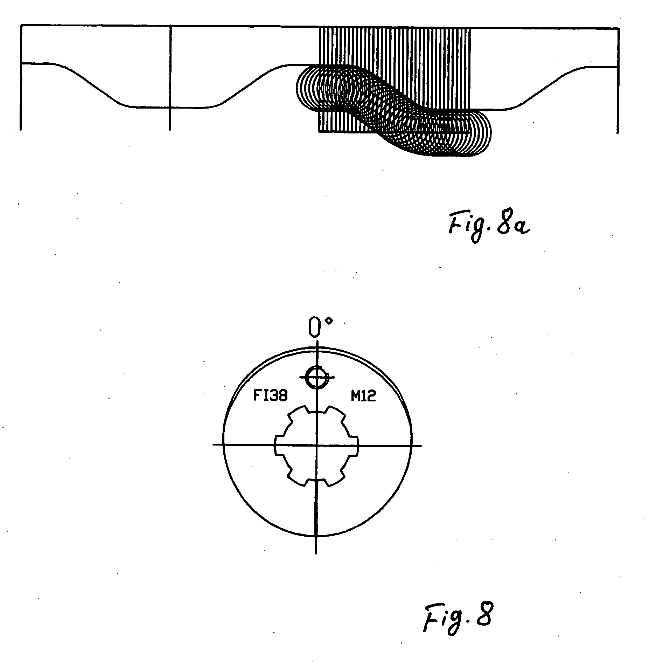

Während die Nockenscheibe der Fig. 7, wie dies aus Fig. 7a ersichtlich ist, zur Erzeugung eines R-Gewindes, also eines Rope- oder Seilgewindes dient, zeigt die Fig. 8 eine Nokenscheibe zur Erzeugung eines T-Gewindes oder Trapezgewindes, wie dies aus der Fig. 8a ersichtlich ist. Es ist erkennbar, dass der Kurvenbereich der Nockenscheibe der Fig. 7 sich über 180° erstreckt, während er bei der Ausgestaltung der Fig. 8 sich über einen geringeren Winkel als 180° erstreckt und der Rest durch Kreisbogen gebildet wird.

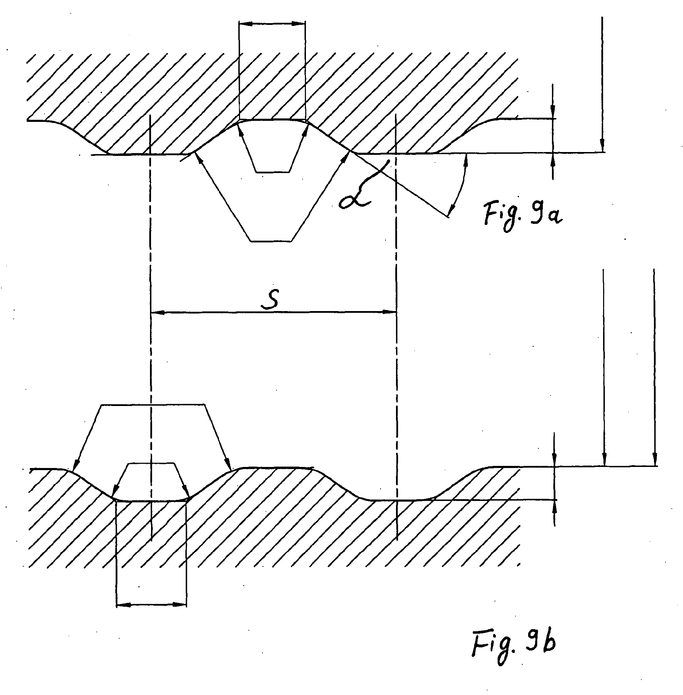

Die Fig. 9a und 9b veranschaulichen in Gegenüberstellung miteinander zusammenwirkende Gewinde an zwei durch Verschrauben kuppelbaren Werkstücken, nämlich einem "Male"-Teil (Fig. 9a) mit einem Außengewinde und einem zugehörigen "Female-Teil" mit einem entsprechenden Innengewinde (Fig. 9b), wobei $\alpha$ der Gewindewinkel von ca. 35° und S die Steigung des Gewindes ist.

Die Gewinde werden durch Drehbearbeiten erzeugt, indem das Werkstück bei Erzeugung eines Außengewindes mit hoher Geschwindigkeit gedreht wird und gleichzeitig der Längsschlitten mit einem geringen axialen Vorschub bewegt wird, während das Drehwerkzeug 4 mit einer auf die Vorschubgeschwindigkeit abgestimmten Geschwindigkeit durch die Nokkenscheibe auf- und abbgewegt wird, so dass, wenn sich das Werkstück oberhalb des Drehwerkzeugs befindet, in der oberen Position des Werkzeugs der Nuten- oder Wellengrund des Schraubgewindes, im Bereich der unteren Position des Drehwerkzeugs der Nuten- oder Wellenberg des Schraubgewindes erzeugt wird, wobei das Schraubgewinde dadurch entsteht, dass Vorschub des Werkstücks und des Drehwerkzeugs in bestimmter Weise aufeinander abgestimmt sind, vorzugsweise gemäß der schon vorstehend genannten Abstimmung.

**Bezugszeichenliste**

| | |
|---|---|
| 1 | Drehmaschine |
| 2 | Gewinde-Dreheinrichtung |
| 2.1 | Nockenteil, Halteteil |
| 2.2 | Antriebsmotor |
| 2.3 | Antriebswelle |
| 2.4 | Kupplungseinheit |
| 3 | Nockenteil/Nockeneinheit |
| 3.1 | Halteteil |
| 3.1a | Längsausnehmung |
| 3.1b | Schulter |
| 3.1c | Ausnehmungen |
| 3.1d | Kugelbüchsen |
| 3.2 | Nockenscheibe |
| 3.3 | Schlitten |
| 3.4 | Widerlager/Stößel |
| 3.5 | Rolle/Rückholfeder |
| 3.6 | Führungsstangen |
| 4 | Drehwerkzeug |
| 4a | Werkzeug |
| S | Steigung |
| V | Vorschub |
| X | Achse |
| $\alpha$ | Gewindewinkel |

**Patentansprüche**

1. Verfahren zum Herstellen von Gewinden mittels Drehen, insbesondere für Bohrgestänge oder dergleichen, wobei Werkstück und Drehwerkzeug (4) eine Relativdrehbewegung mit hoher Geschwindigkeit um eine Achse des Werkstücks und eine Relativlängsbewegung mit dem gegenüber geringer Geschwindigkeit aufweisen und wobei weiterhin zwischen Drehwerkzeug und Werkstück (4) eine relative radiale Oszillations-Bewegung bewirkt wird, wobei die radiale Oszillations-Bewegung mechanisch durch eine Kurvenscheibe (3.2) erzeugt wird, und mit der Relativdrehbewegung synchronisiert wird.

2. Verfahren nach Anspruch 1, **dadurch gekennzeichnet, dass** das Verhältnis F von der Frequenz der Oszillations-Bewegung zur Umdrehungszahl der Relativdrehbewegung

$$F = \frac{S/V}{S/V \pm 1},$$

wobei S die Steigung des Gewindes in mm und V den Vorschub der Relativlängsbewegung in mm/Umdrehung angibt.

3. Verfahren nach Anspruch 1 oder 2, **dadurch gekennzeichnet, dass** das Drehwerkzeug relativ zum Werkstück mittels einer Kurvenscheibe (3.2) bewegt wird.

4. Verfahren nach einem der Ansprüche 1 bis 3, **dadurch gekennzeichnet, dass** das Drehwerkzeug entgegen der Federkraft einer Feder (3.5) durch die Kurvenscheibe (3.2) bewegt wird.

5. Verfahren nach einem der Ansprüche 1 bis 4, **dadurch gekennzeichnet, dass** das Drehwerkzeug (4) an einem Stößel befestigt ist, der durch die Kurvenscheibe (3.2) entgegen der Federwirkung gegen das Werkstück und unter der Wirkung der Feder (3.5) zurückgeführt wird.

6. Vorrichtung zum Herstellen von Gewinden, insbesondere für Bohrgestänge oder dergleichen, mit Einrichtungen, die eine Relativdrehbewegung mit hoher Geschwindigkeit um die Achse eines Werkstücks zwischen diesem und einem Drehwerkzeug (4) und eine Relativlängsbewegung mit demgegenüber geringer Geschwindigkeit zwischen Drehwerkzeug und Werkstück erzeugen, mit einer mechanischen Einrichtung in Form einer Kurvenscheibe (3.2) bestimmt zur Erzeugung einer relativen radialen Oszillations-Bewegung zwischen Werkstück (4) und Drehwerkzeug bei Synchronisation der radialen Oszillations-Bewegung mit der Relativdrehbewegung.

7. Vorrichtung nach Anspruch 6, **dadurch gekennzeichnet, dass** das Verhältnis F von der Frequenz der Oszillations-Bewegung zur Umdrehungszahl der Relativdrehbewegung

$$F = \frac{S/V}{S/V \pm 1},$$

wobei S die Steigung des Gewindes in mm und V den Vorschub der Relativlängsbewegung in mm/Umdrehung angibt.

8. Vorrichtung nach Anspruch 6 oder 7, **dadurch gekennzeichnet, dass** das Drehwerkzeug (4) mittels der Kurvenscheibe (3.2) in radiale Oszillations-Bewegung versetzbar ist.

9. Vorrichtung nach einem der Ansprüche 6 bis 8, **gekennzeichnet durch** eine Feder (3.5) zum elastischen Andrücken eines das Drehwerkzeug tragenden Stößels (3.4) gegen die Kurvenscheibe (3.2).

10. Vorrichtung nach einem der Ansprüche 6 bis 9, **dadurch gekennzeichnet, dass** das Drehwerkzeug (4) an einem Stößel (3.4) befestigt ist, der durch die Kurvenscheibe entgegen der Federwirkung gegen das Werkstück (4) und unter der Wirkung der Feder (3.5) zurückgeführt wird.

**Claims**

1. A method for producing threads by turning, in particular for drill pipes or the like, wherein the workpiece and turning tool (4) have a relative rotary movement at high speed about an axis of the workpiece and a relative longitudinal movement at a comparatively lower speed, wherein a relative radial oscillatory movement is also effected between the turning tool and workpiece (4) and wherein the radial oscillatory movement is generated mechanically by a cam plate (32.) and is synchronised with the relative rotary movement.

2. The method according to Claim 1, **characterised in that** the ratio F of the frequency of the oscillatory movement to the number of revolutions of the relative rotary movement

$$F = \frac{S/V}{S/V \pm 1},$$

where S denotes the pitch of the thread in mm and V denotes the feed rate of the relative longitudinal movement in mm/revolution.

3. The method according to Claim 1 or 2, **characterised in that** the turning tool is moved relative to the workpiece by means of a cam plate (3.2).

4. The method according to any one of Claims 1 to 3, **characterised in that** the turning tool is moved against the resilience of a spring (3.5) by the cam plate (3.2).

5. The method according to any one of Claims 1 to 4, **characterised in that** the turning tool (4) is secured to a plunger which is returned by the cam plate (3.2) against the spring action against the workpiece under the influence of the spring (3.5).

6. A device for producing threads, in particular for drill pipes or the like, with devices which generate a relative rotary movement at high speed about the axis of a workpiece between it and a turning tool (4) and a relative longitudinal movement at a comparatively low speed between the turning tool and workpiece, with a mechanical device in the form of a cam plate (3.2) intended for generating a relative radial oscillatory movement between the workpiece (4) and the turning tool when the radial oscillatory movement is synchronised with the relative rotary movement.

7. The device according to Claim 6, **characterised in that** the ratio F of the frequency of the oscillatory movement to the number of revolutions of the relative rotary movement

$$F = \frac{S/V}{S/V \pm 1},$$

where S denotes the pitch of the thread in mm and V denotes the feed rate of the relative longitudinal movement in mm/revolution.

8. The device according to Claim 6 or 7, **characterised in that** the turning tool (4) is displaceable by means of the cam plate (3.2) in the form of radial oscillatory movement.

9. The device according to any one of Claims 6 to 8, **characterised by** a spring (3.5) for elastically pressing a plunger (3.4) supporting the turning tool against the cam plate (3.2).

10. The device according to any one of Claims 6 to 9, **characterised in that** the turning tool (4) is secured to a plunger (3.4) which is returned by the cam plate against the spring action against the workpiece (4) under the influence of the spring (3.5).

**Revendications**

1. Procédé de fabrication de filetages par rotation, notamment pour trains de tiges de sondage ou leur équivalent, la pièce usinée et l'outil tournant (4) présentant un mouvement relatif de rotation à haute vitesse autour d'un axe de la pièce usinée et un mouvement relatif longitudinal à vitesse plus réduite et un mouvement d'oscillation radial relatif étant déclenché en outre entre l'outil tournant et la pièce usinée (4), le mouvement d'oscillation radial étant produit de façon mécanique par le biais d'une came (3.2) et synchronisé par rapport au mouvement relatif de rotation.

2. Procédé selon la revendication 1, **caractérisé en ce que** le rapport F de la fréquence du mouvement d'oscillation sur le nombre de tours du mouvement relatif de rotation correspond à :

$$F = \frac{S/V}{S/V \pm 1'}$$

S représentant le pas du filetage en mm et V l'avancement du mouvement relatif longitudinal en mm/ tour.

3. Procédé selon la revendication 1 ou 2, **caractérisé en ce que** l'outil tournant est déplacé par rapport à la pièce usinée par le biais d'une came (3.2).

4. Procédé selon l'une quelconque des revendications 1 à 3, **caractérisé en ce que** l'outil tournant est déplacé à l'encontre de la force de ressort d'un ressort (3.5) par le biais de la came (3.2).

5. Procédé selon l'une quelconque des revendications 1 à 4, **caractérisé en ce que** l'outil tournant (4) est fixé à un piston ramené par la came (3.2) à l'encontre de l'effet de ressort contre la pièce usinée et sous l'effet du ressort (3.5).

6. Dispositif de fabrication de filetages par rotation, notamment pour trains de tiges de sondage ou leur équivalent, avec des dispositifs permettant un mouvement relatif de rotation à haute vitesse autour de l'axe d'une pièce usinée entre celle-ci et un outil tournant (4) et un mouvement relatif longitudinal à vitesse plus réduite entre l'outil tournant et la pièce usinée, avec un dispositif mécanique prenant la forme d'une came (3.2) permettant de réaliser un mouvement d'oscillation radial relatif entre la pièce usinée (4) et l'outil tournant lors de la synchronisation du mouvement d'oscillation radial par rapport au mouvement relatif de rotation.

7. Dispositif selon la revendication 6, **caractérisé en ce que** le rapport F de la fréquence du mouvement d'oscillation sur le nombre de tours du mouvement relatif de rotation correspond à :

$$F = \frac{S/V}{S/V \pm 1'}$$

S représentant le pas du filetage en mm et V l'avancement du mouvement relatif longitudinal en mm/ tour.

8. Dispositif selon la revendication 6 ou 7, **caractérisé en ce que** l'outil tournant (4) peut être placé dans un mouvement d'oscillation radial par la came (3.2).

9. Dispositif selon l'une quelconque des revendications 6 à 8, **caractérisé par** la présence d'un ressort (3.5) permettant de comprimer élastiquement un piston (3.4) supportant l'outil tournant contre la came (3.2).

10. Dispositif selon l'une quelconque des revendications 6 à 9, **caractérisé en ce que** l'outil tournant (4) est fixé à un piston (3.4) ramené par la came contre la pièce usinée (4) à l'encontre de l'effet de ressort et sous l'effet du ressort (3.5).

Fig. 1

Fig. 2

Fig. 3

Fig. 4

Fig. 4a

EP 1 910 005 B1

Fig. 5

Fig. 5a

4a

3.3

3.1d

3.1c

3.6

3.1d

Fig. 6

Fig. 7a

0°

SR28    M12

Fig. 7

*Fig. 8a*

0°

FI38        M12

*Fig. 8*

Fig. 9a

Fig. 9b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5076744 F
- EP 1125666 A

- DE 3638698 A1